# EUROPEAN PATENT APPLICATION

(11) **EP 4 071 525 A1**
(43) Date of publication of application: **12.10.2022**
(21) Application number: 22162953.8
(22) Date of filing: 18.03.2022
(51) Int. Cl.: G02B 5/12, G02B 27/14, G02B 30/56, H04N 13/302, H04N 13/388, G06F 3/01, G06F 3/042

(54) **DISPLAY DEVICE**

(30) Priority: 26.03.2021 JP 2021052763
(71) Applicant: Alps Alpine Co., Ltd., Ota-ku, Tokyo 1458501 (JP)
(72) Inventor: ASHIMINE, Katsunari, Iwaki (JP)
(74) Representative: Schmitt-Nilson Schraud Waibel Wohlfrom Patentanwälte Partnerschaft mbB

(57) **Abstract**

A display device (100) in which a decrease in contrast and visibility of an image displayed in the air is prevented is provided.

A display device (100) of the present invention includes a light source (110), a retroreflective member (130) disposed in a range which can be observed from a preset observation range (140) of an observer, and a beam splitter (120) which reflects light from the light source (110) toward the retroreflective member (130) and transmits the light reflected by the retroreflective member (130). The light source (110) and the retroreflective member (130) are positioned so that light specularly reflected by the retroreflective member (130) does not enter the observation range (140).

## Description

The present invention relates to a display device, and more particularly to a display device that forms an image of a light source such as a display in the air.

An aerial display that forms an image displayed on a display in the air using a retroreflective member or the like has been proposed. For example, in order to enable observation of an image formed in the air from a wider angle, the display device of JP 2017-107165 A uses two retroreflective members and one of the retroreflective members is disposed on an emission axis of a light source. In the image display device of JP 2018-81138 A, in order to facilitate adjustment of an image forming position of an image, a half mirror, a retroreflective member, and an image output device are disposed in parallel and a position of the half mirror or the image output device is changed so that the image forming position can be adjusted. In the image display device of JP 2019-66833 A, in order to minimize a decrease in visibility of an image, the number of times of light transmission through a phase difference member (λ/4 plate) is reduced and it is made difficult for dust or the like to enter between a retroreflective member and the phase difference member. In the aerial image display device of JP 2019-101055 A, in order to reduce a thickness of a device, a display and a retroreflective member are disposed parallel to a beam splitter and a deflection optical element is disposed on the display.

As exemplified in JP 2007-96638 A, JP 2007-96638 A, JP 2007-96638 A, and JP 2007-96638 A, an aerial display is a technique in which light output from a display is made into an image again in the air using a light source (display) and an optical system such as a retroreflective member and a beam splitter and an image is floated in a space in front of an observer's eyes. In a display device which realizes an aerial display, there is a problem that a virtual image due to specular reflection (regular reflection) from a protective film or a λ/4 film formed on a surface of a retroreflective member appears so that the virtual image and an aerial image overlap. In order to prevent this problem, a display device in the related art takes measures such as bending a retroreflective member to change a magnification between an aerial image and the virtual image, that is, making the virtual image enlarged to lower the brightness.

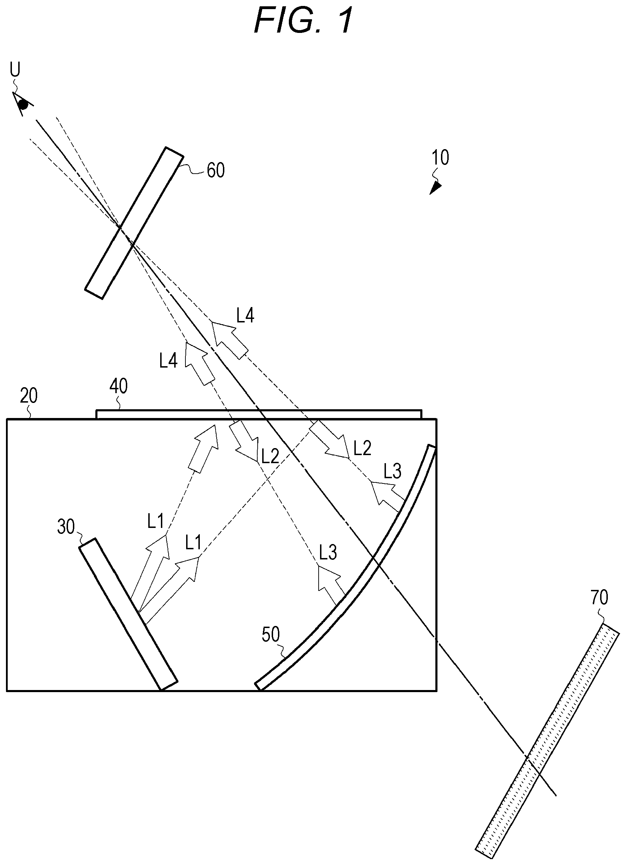

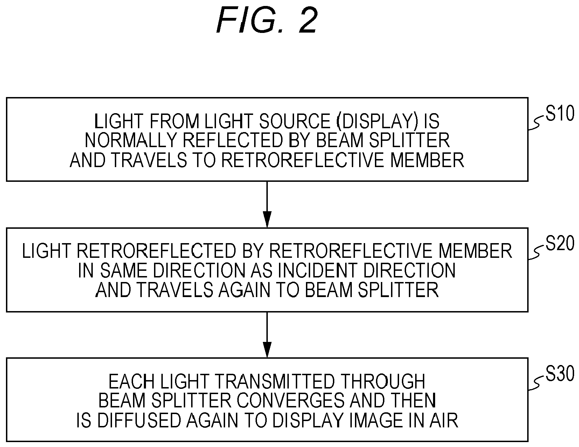

Fig. 1 illustrates an example of a schematic cross-sectional structure of a display device in the related art and Fig. 2 is a flow for explaining an operation when an aerial image is displayed. In a display device 10, for example, a light source (for example, a display which outputs an image) 30, a beam splitter 40, and a curved retroreflective member 50 are disposed in a rectangular housing 20. The beam splitter 40 is a plate-like optical member which divides incident light into reflected light and transmitted light at a predetermined ratio and is attached to a surface of the housing 20.

Light L1 emitted from the light source 30 is reflected by the beam splitter 40 and the reflected light L2 travels to the retroreflective member 50 (S10). The retroreflective member 50 is an optical member which reflects light in the same direction as the incident light and includes, for example, a full cube corner type retroreflective element, a triangular pyramid retroreflective element, a bead type retroreflective element, or the like. For example, a protective film, a λ/4 film, or the like may be formed on a surface of the retroreflective member 50.

The reflected light L2 from the beam splitter 40 is reflected by the retroreflective member 50 in the same direction as the incident direction and reflected light L3 travels again to the beam splitter 40 (S20). Light L4 transmitted through the beam splitter 40 converges and then is diffused again and an image 60 is formed in the air in front of a viewpoint U of the observer's eyes (S30). The aerial image 60 is formed at a position symmetrical to the light source 30 with respect to the surface of the beam splitter 40. The aerial image 60 which can be observed by a user is limited to a range in which the retroreflective member 50 can be viewed from a viewpoint U of the user via the beam splitter 40.

If the light L2 reflected by the beam splitter 40 is specularly reflected by a protective film or the like on the surface of the retroreflective member 50, that is, if the retroreflective member 50 functions like a normal concave surface mirror and reflects the light L2, an enlarged virtual image 70 of the light source 30 is generated behind the retroreflective member 50. Although the brightness is reduced by making the virtual image 70 enlarged, the virtual image 70 is seen to be superimposed on the background of the aerial image 60 from the viewpoint U of the user. Thus, the contrast and the visibility of the aerial image 60 are reduced.

An object of the present invention is to provide a display device in which a decrease in contrast and visibility of an image displayed in the air can be minimized and a space input device using such display device.

The invention relates to a display device, a space input device and a display method according to the appended claims. Embodiments are disclosed in the dependent claims.

A display device according to an aspect of the present invention is a display device capable of displaying an image in the air using a retroreflective member, the display device including: a light source; a retroreflective member disposed in a range which can be observed from a preset observation range of an observer; and a beam splitter which reflects light from the light source toward the retroreflective member and transmits light reflected by the retroreflective member, in which the light source and the retroreflective member are positioned so that light specularly reflected by the retroreflective member does not enter the observation range.

In an embodiment, a direction in which a virtual image of the light source due to specular reflection of the retroreflective member can be observed is a direction in which the virtual image is out of the observation range. In an embodiment, a direction in which the virtual image can be observed is a direction in which the virtual image is assumed not to be observed. In an embodiment, the observation range is a two-dimensional range at a determined distance from the retroreflective member. In an embodiment, the retroreflective member extends such that a central portion is more concavely bent than both end portions with respect to the observation range. In an embodiment, a protective film or a phase adjustment film is formed on a surface of the retroreflective member. In an embodiment, the light source includes an image output device which outputs an image.

A space input device according to an aspect of the present invention includes the above-described display device and a detection means which detects an input operation performed on an aerial image displayed by the display device. In an embodiment, the detection means includes a sensor which detects a three-dimensional distance of the input operation.

A display method according to another aspect of the present invention is for a display device including a light source, a beam splitter, and a retroreflective member, the display method including reflecting light from the light source by the beam splitter and causing the reflected light to travel to the retroreflective member, causing light incident on the retroreflective member to retroreflect in the same direction as an incident direction and causing light specularly reflected by the retroreflective member to travel in a direction in which the light does not enter a preset observation range of an observer, and converging light transmitted through the beam splitter to converge and then diffusing the light again to display an image in the air.

In an embodiment, a direction in which a virtual image of the light source due to specular reflection of the retroreflective member can be observed is a direction in which the virtual image is out of the observation range. In an embodiment, a direction in which the virtual image can be observed is a direction in which the virtual image is assumed not to be observed.

According to aspects of the present invention, since light reflected due to specular reflection of the retroreflective member does not enter an observation range of an observer, a virtual image of a light source is not seen on the background of an image displayed in the air and the contrast and the visibility of the image displayed in the air can be improved.
Fig. 1 is a view illustrating a schematic cross section of a display device in the related art.
Fig. 2 is a flow for explaining an operation of the display device in the related art.
Fig. 3 is a view illustrating a schematic cross section of a display device according to an embodiment of the present invention.
Figs. 4A to 4C illustrate an embodiment of a retroreflective member as may be used in the embodiment of Fig. 3, in which Fig. 4A is a plan view of the retroreflective member, Fig. 4B is a top view of the retroreflective member, and Fig. 4C is a top view schematically illustrating a positional relationship between an eye point and the retroreflective member.
Fig. 5 is a view illustrating a schematic cross section of a space display device according to a second embodiment of the present invention.
Fig. 6 is a diagram illustrating a display example of a space image.

Embodiments of the present invention will be described below. A display device of the present invention displays an image using retroreflection in a three-dimensional space without special glasses having to be worn or the like. In an aspect, the display device of the present invention is applied to a user input interface using an image displayed in the air.

### [Embodiments]

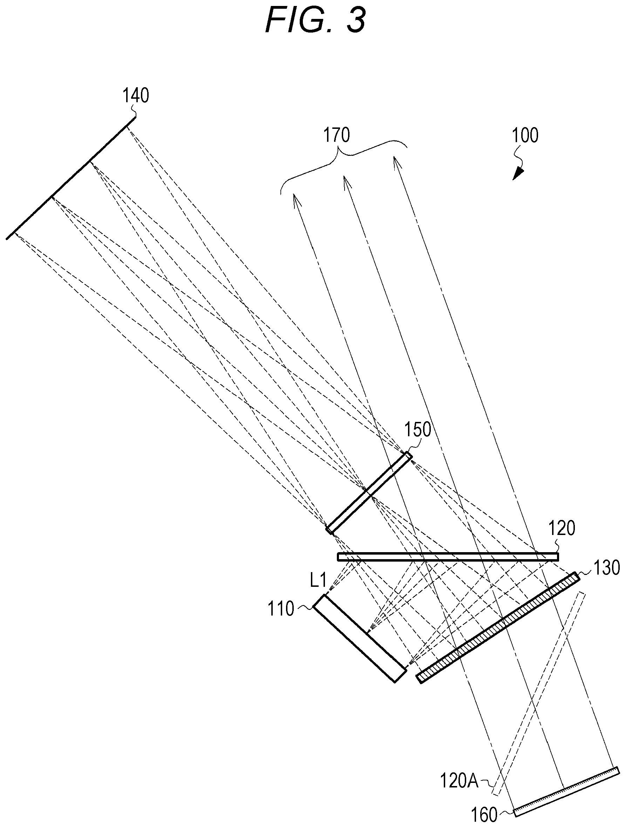

An embodiment of the present invention will be described in detail below. Fig. 3 is a cross-sectional view illustrating a schematic configuration of a display device according to an embodiment of the present invention. A display device 100 of the present embodiment is configured to include a light source 110, a beam splitter 120, and a retroreflective member 130. These members are accommodated in, for example, a housing, a casing, or the like.

The display device 100 of the embodiment is characterized in that the virtual image is not enlarged and made difficult to see by bending the retroreflective member, but a virtual image (reflected light) of a light source (display) 110 is generated at a position away from a set eye point (observation range) 140 and an optical layout in which the virtual image is not seen at all on the background of an aerial image is realized, thereby improving the contrast and the visibility of the aerial image.

The eye point 140 is a two-dimensional region in which a range to be observed is defined at a determined distance (for example, a determined distance from a beam splitter 120) from the display device 100. For example, in the case in which the display device 100 is disposed in a space in a vehicle, the eye point 140 is a two-dimensional region set on a surface on which eyes of a person who gets on a driver seat, a passenger seat, or the like are located and such a surface on which the eyes are located and the two-dimensional region on the surface can be estimated from statistical data.

The light source 110 includes an image output device such as a display which outputs an image to a two-dimensional display area and a projector which projects an image. The display is, for example, a liquid crystal display, an organic electroluminescence (EL) display, or the like, and the projector is, for example, a liquid crystal projector, a digital light processing (DLP) projector, or the like. The light source 110 is driven by a controller (not illustrated) or the like and outputs an image.

The beam splitter 120 is a transparent optical member which separates incident light into reflected light and transmitted light. The beam splitter 120 is configured by, for example, forming a dielectric multilayer film, an anti-reflection film, or the like on a front surface or a back surface of a substrate of such as flat glass or plastic. Although an amount of reflected light and an amount of transmitted light of the beam splitter 120 may be appropriately adjusted in accordance with the luminance of an image of the light source 110, the luminance of the generated aerial image 150, and the like, for example, a half mirror in which the amount of reflected light and the amount of transmitted light are equal may be used. The beam splitter 120 is disposed so as to be inclined with respect to a light emission direction of the light source 120. In this way, the beam splitter 120 reflects a part of the incident light L1 from the light source 110 toward the retroreflective member 130.

The retroreflective member 130 is an optical member which emits light in the same direction as that of the incident light. The structure and material of the retroreflective member 130 are not particularly limited as long as the retroreflective member can reflect light in the same direction as the incident direction. For example, the retroreflective member 130 includes prismatic type retroreflective elements such as triangular pyramid type retroreflective elements and full cube corner type retroreflective elements, or bead type retroreflective elements. Furthermore, a protective film for protecting the reflective elements may be formed on a surface of the retroreflective member 130 or a λ/4 film may be formed in the case in which polarized light is handled in an optical system of the display device 100.

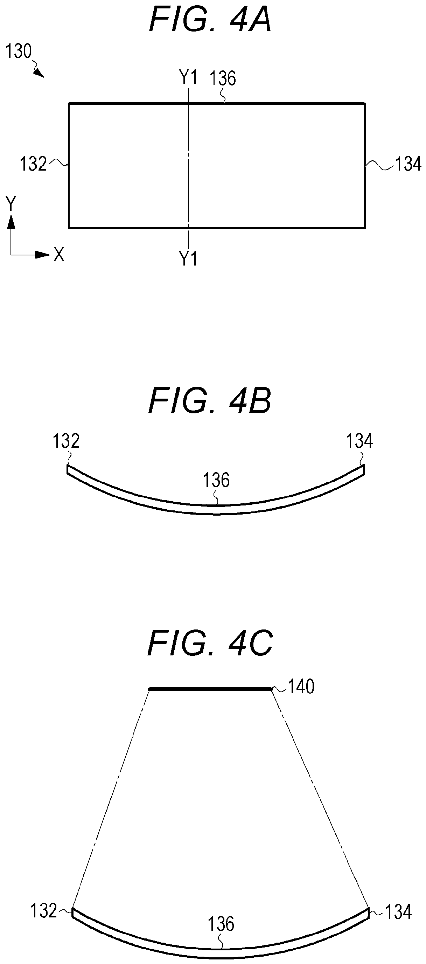

An exterior form of the retroreflective member 130 may be flat or bent. Figs. 4A to 4C illustrate an example in which the retroreflective member 130 is bent in a longitudinal direction. Fig. 4A is a front view of the retroreflective member 130, Fig. 4B is a top view of the retroreflective member 130, and Fig. 4C is a top view schematically illustrating a positional relationship with the eye point 140. The longitudinal direction mentioned herein is an X direction.

The retroreflective member 130 has, for example, a rectangular exterior form and extends in the X direction such that a central portion 136 is concave with respect to both end portions 132 and 134. A cross section of the retroreflective member 130 illustrated in Fig. 3 is a cross section in a Y direction of Figs. 4A to 4C (for example, cross section taken along line Y1). As described above, when the retroreflective member 130 is concavely bent in the X direction, a range of the retroreflective member 130 in the X direction which can be observed from the eye point 140 can be expanded as illustrated in Fig. 4C.

The retroreflective member 130 reflects light incident from the beam splitter 120 in the same direction as that of the light and causes the reflected light to travel again to the beam splitter 120. Also, light transmitted through the beam splitter 120 converges and then is diffused and the image 150 is displayed in the air in front of the eye point 140 of the observer's eyes. The aerial image 150 is formed at a position symmetrical to the light source 110 with respect to a surface of the beam splitter 120. The image 140 which can be observed by the observer is limited to a range in which the retroreflective member 130 can be viewed from the viewpoint of the eye point 140.

A virtual image due to specular reflection of the retroreflective member 130 will be described below. The specular reflection of the retroreflective member 130 is different from the retroreflection in which light is reflected in the same direction as that of the incident light and is to reflect light incident at an incident angle θ1 with respect to an optical axis of the retroreflective member 130 at an emission angle θ2 (where θ1=θ2). Light incident on the retroreflective member 130 is light from the light source 110 reflected by the beam splitter and a part of the incident light is specularly reflected on a surface of the retroreflective member 130. For example, when a protective film or a λ/4 film is formed on a surface, specular reflection is likely to occur.

As illustrated in Fig. 3, the virtual image 160 of the light source 110 due to the specular reflection of the retroreflective member 130 is generated at a position symmetrical to the aerial image 150 with respect to a surface of the retroreflective member 130. A broken line 120A indicates a position symmetrical to the beam splitter 120 with respect to a surface of the retroreflective member 130. In the embodiment, a direction of the retroreflective member 130 in the Y direction is inclined such that the virtual image 160 due to the specular reflection of the retroreflective member 130 cannot be seen from the eye point 140 of the observer. That is to say, a direction 170 in which the virtual image 160 can be observed is out of the eye point 140. The direction 170 in which the virtual image 160 can be observed is an area in which the virtual image 160 can be assumed that the observer will not observe the display device 100. For example, in the case in which the display device 100 is disposed in a space in a vehicle, the direction 170 is directed to a range (for example, a ceiling or the like) in which a user can be assumed not to perform observation.

As described above, according to the embodiment, unlike the display method in the related art, it is possible to significantly improve the contrast and the visibility of the aerial image by optically designing or laying out the virtual image so that the virtual image can be seen only from a position from which viewing is not expected, instead of making the virtual image enlarged and making it difficult to see.

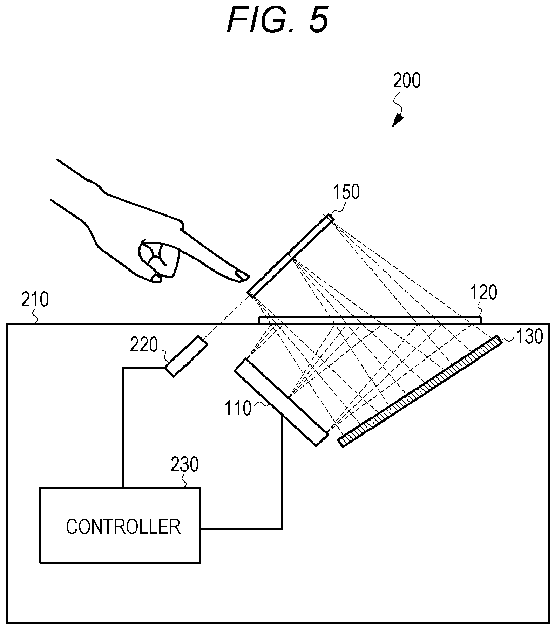

A second embodiment of the present invention will be described below. The second embodiment relates to a space input device in which the display device of the first embodiment is applied to a user input interface. Fig. 5 is a diagram illustrating a schematic configuration of a space input device according to a second embodiment. A space input device 200 includes a housing 210 which accommodates the display device 100 described in the first embodiment, a three-dimensional distance sensor 220 which detects an object (for example, a user's finger or the like) on an aerial image 150, and a controller 230 which controls an image output and the like of a light source 110 on the basis of a detection result from the three-dimensional distance sensor 220.

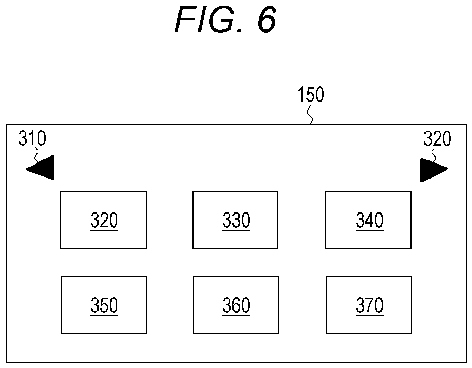

In one aspect, the controller 230 controls the image output of the light source 110 to display an aerial image 150 as illustrated in Fig. 6. The aerial image 150 includes, for example, left and right scroll keys 310 and 320 and images 320 to 370 for instructing an input. The user sees the aerial image 150 floating in front of the eye point 140 and holds his or her finger over a display position thereof to instruct a desired input. For example, when scrolling a screen to the left is desired, his/her finger is held over a key 310 or when inputting (for example, a voice reproduction instruction) the image 320 is desired, his/her finger is held over the image 320.

The three-dimensional distance sensor 220 detects a three-dimensional distance of the user's finger and outputs the three-dimensional distance to the controller 230. As the three-dimensional distance sensor 220, for example, a sensor using image data of a stereo camera or the like, a sensor combining a light emitting element such as infrared light or a light emitting diode (LED) and a light receiving element or the like can be used.

The controller 230 calculates a position of the user's finger based on the detection result of the three-dimensional distance sensor 220 and determines, for example, that a user has performed an input operation on a key 210 or an input of the image 320. The controller 230 controls the light source 110 based on such an input determination result to output the next image or outputs the determination result to an external electronic device (not illustrated).

As described above, according to the embodiment, the user input can be sensed using an image projected in a space and the convenience of the user input can be improved. Furthermore, since the user input is performed on an image in the air, it is possible to realize a safe input preventing infection by contact or the like by making the user input non-contact.

The space input device 200 in the embodiment can be applied to any user input and can be applied to, for example, a computer device, an in-vehicle electronic device, an ATM in a bank or the like, a ticket purchasing machine in a station or the like, and the like.

An optical layout of the display device 100 illustrated in Fig. 3 is an example and the present invention is not limited to such an optical layout. In short, an optical layout in which a virtual image due to the specular reflection of the retroreflective member 130 cannot be observed from the observation range (eye point) 140 of the observer may be used.

Although the preferred embodiments of the present invention have been described in detail above, the present invention is not limited to the specific embodiments, and various modifications and changes can be made within the scope of the gist of the invention set forth in the claims.

### Reference Signs List

- 100: Display device
- 110: Light source
- 120: Beam splitter
- 130: Retroreflective member
- 132, 134: End portion
- 136: Central portion
- 140: Eye point (observation range)
- 150: Aerial image
- 160: Virtual image
- 200: Space input device
- 210: Housing
- 220: Three-dimensional distance sensor
- 230: Controller

## Claims

1. A display device (100) capable of displaying an image in the air using a retroreflective member (130), the display device (100) comprising:
a light source (110);
the retroreflective member (130) disposed in a range which is able to be observed from a preset observation range (140) of an observer; and
a beam splitter (120) which reflects light from the light source (110) toward the retroreflective member (130) and transmits the light reflected by the retroreflective member (130),
wherein the light source (110) and the retroreflective member (130) are positioned so that light specularly reflected by the retroreflective member (130) does not enter the observation range (140).

2. The display device (100) according to claim 1, wherein a direction in which a virtual image (160) of the light source (110) due to specular reflection of the retroreflective member (130) is able to be observed is a direction in which the virtual image (160) is out of the observation range (140).

3. The display device (100) according to claim 1 or 2, wherein a direction in which the virtual image (160) is able to be observed is a direction in which it is assumed that the virtual image (160) is not observed.

4. The display device (100) according to any one of claims 1 to 3, wherein the observation range (140) is a two-dimensional range at a determined distance from the retroreflective member (130).

5. The display device (100) according to any one of claims 1 to 4, wherein the retroreflective member (130) extends such that a central portion (136) of the retroreflective member (130) is more concavely bent than both end portions (132, 134) with respect to the observation range (140).

6. The display device (100) according to any one of claims 1 to 5, wherein a protective film or a phase adjustment film is formed on a surface of the retroreflective member (130).

7. The display device (100) according to any one of claims 1 to 6, wherein the light source (110) includes an image output device which outputs an image.

8. A space input device (200) comprising:
the display device (100) according to any one of claims 1 to 7; and
a detection means configured to detect an input operation performed on an image in the air displayed by the display device (100).

9. The space input device (200) according to claim 8, wherein the detection means includes a sensor which detects a three-dimensional distance of the input operation.

10. A display method of a display device (100) including a light source (110), a beam splitter (120), and a retroreflective member (130), the display method comprising:
reflecting light from the light source (110) by the beam splitter (120) and causing the reflected light to travel to the retroreflective member (130);
causing light incident on the retroreflective member (130) to be retroreflected in the same direction as an incident direction, and causing light specularly reflected by the retroreflective member (130) to travel in a direction in which the light does not enter a preset observation range (140) of an observer; and
converging light transmitted through the beam splitter (120) and then diffusing the light again to display an image in the air.

11. The display method according to claim 10, wherein a direction in which a virtual image (160) of the light source (110) due to specular reflection of the retroreflective member (130) is able to be observed is a direction in which the virtual image (160) is out of the observation range (140).

12. The display method according to claim 10 or 11, wherein a direction in which the virtual image (160) is able to be observed is a direction in which it is assumed that the virtual image (160) is not observed.
